Europäisches Patentamt

**(19)** European Patent Office

Office européen des brevets

**(11)** Publication number : **0 356 940 B1**

**(12)** # EUROPEAN PATENT SPECIFICATION

**(45)** Date of publication of patent specification :
**15.02.95 Bulletin 95/07**

**(51)** Int. Cl.⁶ : **G06F 7/00**

**(21)** Application number : **89115727.3**

**(22)** Date of filing : **25.08.89**

**(54)** Finite state machine.

**(30)** Priority : **29.08.88 JP 213980/88**

**(43)** Date of publication of application :
**07.03.90 Bulletin 90/10**

**(45)** Publication of the grant of the patent :
**15.02.95 Bulletin 95/07**

**(84)** Designated Contracting States :
**DE FR GB**

**(56)** References cited :
**EP-A- 0 184 158**
**WO-A-84/02408**
**US-A- 4 338 675**

**(56)** References cited :
**IEEE TRANSACTIONS ON CIRCUITS AND SYSTEMS. vol. 35, no. 5, May 1988, NEW YORKUS pages 495 - 505; B.BARAZESH ET AL.: 'A VLSI Signal Processor with ComplexArithmetic Capability '**

**(73)** Proprietor : **MATSUSHITA ELECTRIC INDUSTRIAL CO., LTD.**
**1006, Oaza Kadoma**
**Kadoma-shi, Osaka-fu, 571 (JP)**

**(72)** Inventor : **Edamatsu, Hisakazu**
**29-12, Ikuno-3-chome**
**Katano-shi (JP)**

**(74)** Representative : **Patentanwälte Leinweber & Zimmermann**
**Rosental 7/II Aufg.**
**D-80331 München (DE)**

## Description

## BACKGROUND OF THE INVENTION

The present invention relates to a finite state machine for use in a control apparatus or a control circuit, and more particularly to a finite state machine which is required to quickly perform transition to a next state.

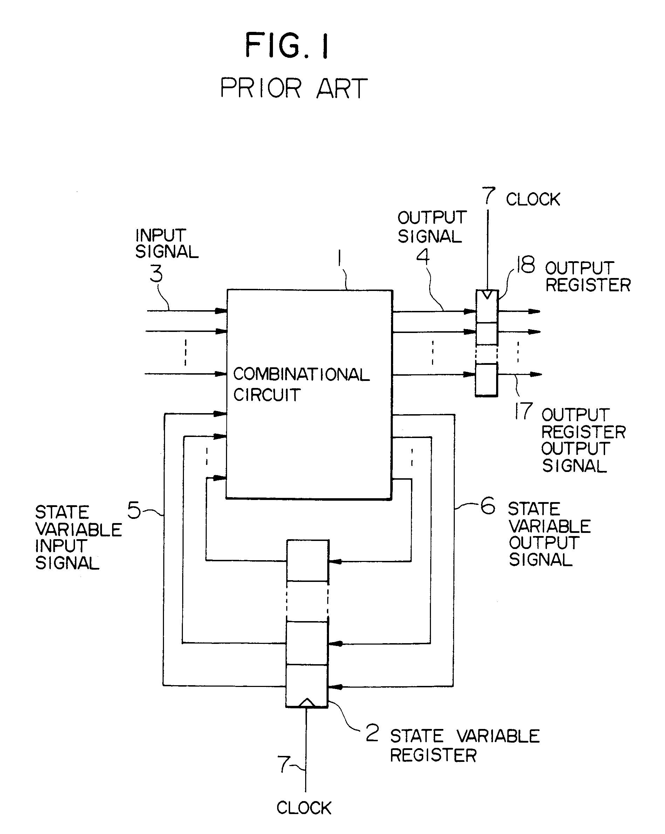

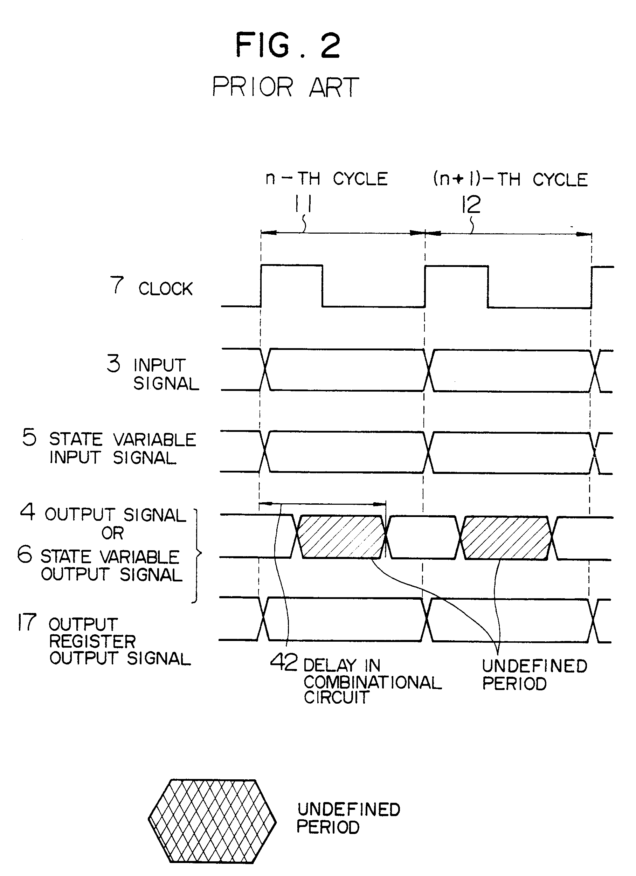

The prior art state machine is disclosed in, for example, Hayes "Computer Architecture and Organization", page 79, McGraw-Hill Book Company. Figs. 1 and 2 show the arrangement and timing chart of the prior art state machine, respectively. In Fig. 1, 1 is a combinational circuit; 2 is a state variable register; 3 is an input signal; 4 is an output signal; 5 is a state variable input signal; 6 is a state variable output signal; 7 is a clock; 17 is an output register signal; and 18 is an output register.

Now referring to Figs. 1 and 2, explanation will be given for the arrangement and operation of the prior art state machine. It is assumed that the input signal 3 is inputted externally in synchronism with the rising edge of the clock 7. The hatched portions in Fig. 2 represent that the signal during them is undefined. At the beginning of a n-th cycle 11, the input signal 3 is externally inputted to the combinational circuit 1 and also the state variable input signal is internally inputted thereto. The combinational circuit 1 produces, with a circuit delay 42, the output signal 4 and the state variable output signal 6. The state variable output signal 6 is held in the state variable register 2 in synchronism with the rising edge of the clock 7; and likewise the output signal is held in the output register 18 in synchronism with the rising edge of the clock 7. As a result, from the outset of a (n + 1)-th cycle, the state variable input signal 5 and the output register signal 17, which are results corresponding to the above input signal 3 and state variable input signal 5, become usable.

In this way, in the arrangement of the prior art state machine, in order to obtain the output register output signal 17 from the outset of the (n + 1)-th cycle 12, the input signal 3 and the state variable input signal 5 must be previously defined prior to the beginning of the n-th cycle 11. And if the state transition in the state machine is intended to be performed for signal input on the way of an (n - 1)-th cycle, the corresponding state variable output signal 6 appears at the outset of the (n + 1)-th cycle. Therefore, in this case, the n-th cycle is an unnecessary cycle. For example, using the result from an arithmetic unit or the like which is controlled by the output register output signal 17 in the (n - 1)-th cycle, it is impossible to decide the state variable input signal 5 or the output register output signal 17 in the n-th cycle.

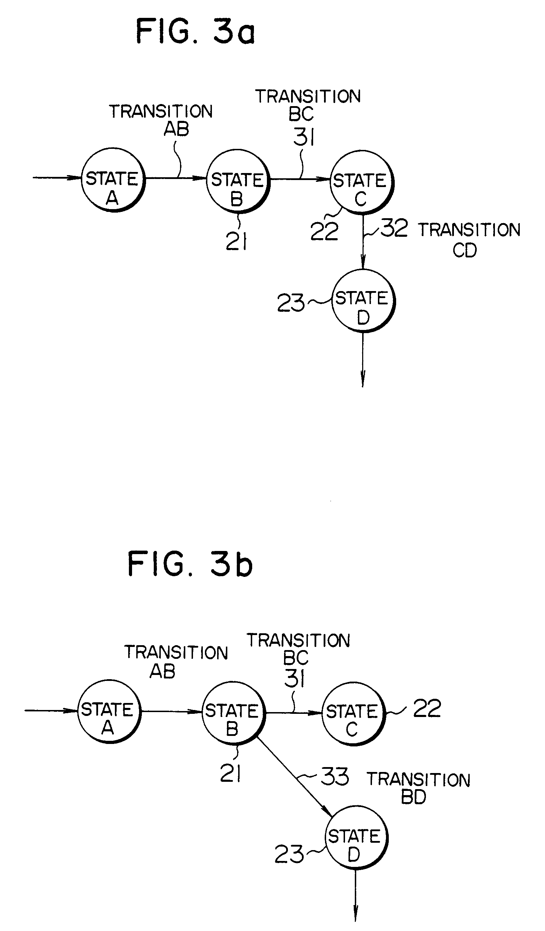

This will be explained with reference to a state transition diagram in the case where the prior art state machine is used, as shown in Fig. 3a. It is assumed in Fig. 3a that state B 21 corresponds to the (n - 1)-th cycle. The arithmetic unit is controlled by the output register output signal 17 in this cycle so that it is intended that the state in the next cycle is controlled by the signal output from the arithmetic unit. However, the state of the n-th cycle 12, i.e. state C 22 has been already decided in the (n - 1)-th cycle 11, and the state corresponding to output value from the arithmetic unit will be first obtained in the further next cycle (n + 1). In this case, the state C 22 in the n-th cycle 12 is unnecessary cycle, and hence the operation carried out in this cycle must be disregarded. Thus, the cycle corresponding to the unnecessary cycle C 22 is inserted during the transition from the state B 21 to the state D 23.

However, the above arrangement has the following problem. It is impossible to use, as the input signal to the combinational circuit 1, the signal input on the way of the (n - 1)-th cycle when the state is at the state B 21 and thereby immediately transit the state to the state D 23 in the next n-th cycle. By inserting a redundant state C 22 in the n-th cycle, the state will first transit to the state D 23 in the (n + 1)-th cycle. Thus, redundant time is required for the state transition.

## SUMMARY OF THE INVENTION

An object of the present invention is to provide a finite state machine which can immediately transit its state, by the signal on the way of an (n - 1)-th cycle, which is a present cycle thereof, to the state corresponding to the input signal, and perform the state transition with a smaller number of cycles.

According to the invention, the above object is achieved by a finite state machine according to claim 1. Preferred embodiments are claimed in the subclaims.

In accordance with one embodiment of the present invention, the constant generation means is controlled by the discrimination signal which is an output from the first combinational logic generation circuit, thereby outputting the second output signal and the second state variable output signal, and the first and the second selection means are selected by the selection means controlling signal from the second combinational logic generation means to which the second input signal and the discrimination signal which is the output from the first combinational logic creation means, thereby deciding a final output signal and a final state variable output signal, so that the state transition to the state decided by the second input signal can be performed immediately in the cycle subsequent to the cycle when the second input signal is inputted, thus realizing high speed state transition without inserting a redundant cycle.

## BRIEF DESCRIPTION OF THE DRAWINGS

Figs. 1 and 2 are an arrangement diagram and an operation timing chart of the prior art state machine, respectively;

Fig. 3a is a state transition diagram of the prior art state machine;

Fig. 3b is a state transition diagram of the state machine according to the present invention;

Figs. 4 and 5 are an arrangement diagram and an operation timing chart of the state machine according to a first embodiment of the present invention;

Fig. 6 is an arrangement diagram of the state machine according to a second embodiment of the present invention;

Fig. 7 is a block diagram of an arithmetic unit which is controlled by the state machine according to the second embodiment of the present invention;

Fig. 8 is a block diagram showing the connection relationship between the state machine according to the second embodiment of the present invention, and the arithmetic unit connected herewith;

Fig. 9 is a circuit diagram of the selector control circuit in the second embodiment of the present invention;

Fig. 10 is an arrangement diagram of the state machine according to a third embodiment of the present invention; and

Fig. 11 is an arrangement diagram of the state machine according to a fourth embodiment of the present invention.

## DESCRIPTION OF THE PREFERRED EMBODIMENTS

### Embodiment 1

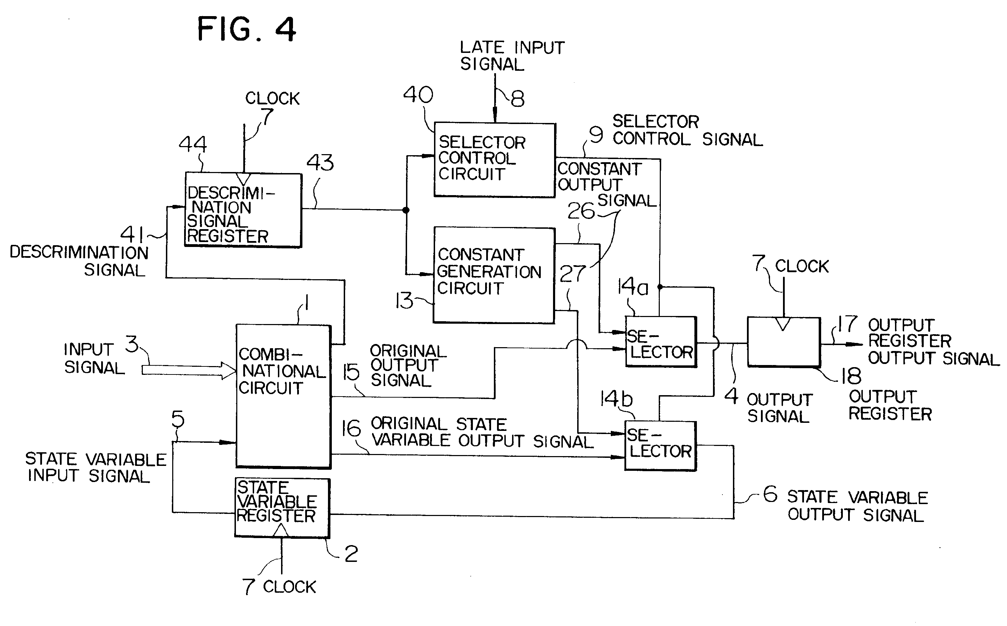

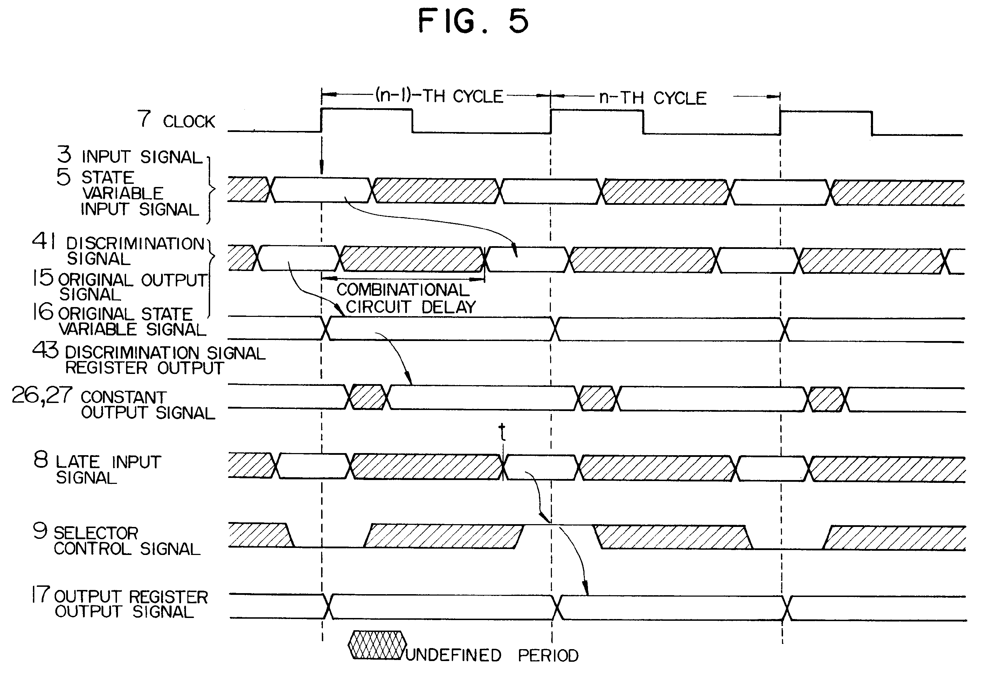

Figs. 4 and 5 are an arrangement diagram and an operation timing chart of the state machine according to a first embodiment of the present invention. In Fig. 4, 13 is a constant generation circuit for generating a constant output signal 26 for an output signal and another constant output signal 27 for a state variable output signal; and 14a and 14b are selectors which perform the selection between the constant output signal 26 from the constant generation circuit 13 and an original output signal 15 from a combinational circuit 1 (first combinational logic generation means) and the selection between the constant output signal 27 from the constant generation circuit 13 and an original state variable output signal 16 thereby to output an output signal 4 and a state variable output signal 6, respectively. The output signal 4 passes through an output register 18 to provide an output register output signal 17. This output register output signal 17 constitutes an external output from the state machine of Fig. 4. On the other hand, the state variable output signal 6 passes through a state variable register 2 to provide a state variable input signal 5 which will be inputted to the combinational circuit 1. Additionally, Fig. 3b shows the state transition diagram corresponding to the present embodiment. Like reference numerals in Fig. 4 denote like components or functions in Fig. 1 and hence the explanation thereof will be omitted.

The operation of the state machine thus constituted according to the first embodiment of the present invention will be explained below with reference to Figs. 4, 5 and 3b.

In Fig. 5, hatched portions represent that the signals during them are undefined. As seen from Fig. 5, it is assumed that a late input signal 8 is inputted late from the other input signal 3 or a state variable input signal 5 in an (n - 1)-th cycle 10. Also it is assumed that both the state variable register 2 and the output register 18 are driven by the clock 7, and the state variable output signal 6 and the output signal 4 are taken in the register 2 and the register 18, respectively, at the rising edges of the clock 7. Moreover, it is assumed that the late input signal 8 is defined at the time t in the (n - 1)-th cycle in the timing chart of Fig. 5, and further assumed that the time interval from the time t to the subsequent rising edge of the clock 7 is shorter than the circuit delay 42 of the combinational circuit 1 and hence it is impossible to newly decide the original output signal 15 from this time t in the combinational circuit 1.

The state variable input signal 5 in the (n - 1)-th cycle corresponds to the state B 21 in Fig. 3, and the constant output signal 27 from the constant generation circuit 13 corresponds to the state D 23 in Fig. 3. In response to input of the input signal 3 and the state variable input signal 5, the combinational circuit 1 outputs an original output signal 15, an original state variable signal 16 and a discrimination signal 41 after the combinational circuit delay 42 from the rising edge of the clock 7 in the (n - 1)-th cycle. The original state variable output 16 corresponds to the state C 22 in Fig. 3b, and commonly, at the time of transition to the subsequent n-th cycle the state transition BC 31 from the state B 21 to the state C 22 will occur. The discrimination signal 41 is taken in a discrimination signal register 44 by the clock 7 to provide a discrimination register output 43. The discrimination signal register output 43 which is an input to a selector control circuit (second combinational logic generation means) 40 in the (n - 1)-th cycle is the discrimination signal 41 generated in an (n - 2)-th cycle.

Now it is assumed that the discrimination signal 41 and the discrimination signal register output 43 are composed of a two-bit signal S1, S0, respectively. For simplicity, the discrimination signal register output 43 is represented by (S1, S0). Further, it is assumed that the late input signal 8 is composed of a two-bit signal L1, L0, and for simplicity it is represented by (L1, L0). The selector control circuit 40 creates a selector control signal W 9 by the following logical expression

$$W = S1 \times L1 + S0 \times L0 \quad (1)$$

In the expression (1), x denotes a logical AND and + denotes a logical OR. The selector control circuit 40, since the expression (1) is simple, can carry out the evaluation in a time sufficiently shorter than the circuit delay 42 of the combinational circuit 1. It is assumed that when the selector control signal 9 is "1" the selectors 14a and 14b select the constant output signals 26 and 27 from the constant generation circuit 13, respectively, and when the selector control signal 9 is "0", they select the original output signal 15 and the original state variable signal 16, respectively.

Now it is assumed that (S1, S0) = (1, 0) has been outputted as the discrimination signal register output 43 in the (n - 1)-th cycle. And it is assumed that the late input signal is (L1, L0) = (1, 1) at the time t. The selector control circuit 40 carries out the evaluation of the expression (1) immediately from the time t when the late input signal has been defined. As a result, the selector control signal 9 becomes "1" so that both the selectors 14a and 14b select the constant generation signals 26 and 27 from the constant generation circuit 13 thereby to be outputted as the output signal 4 and the state variable output signal 6. Thus, at the rising edge of the clock 7 in the subsequent n-th cycle, the outputs from the constant generation circuit 13 will be latched in the output register 18 and the state variable register 2. This corresponds to the state transition BD 33 from the state B 21 to the state D 23. Then, the state transition BC 31 to the state C 22 is not performed. It should be understood that also when the late input signal is (L1, L0) = (1, 0), the state transition BD 33 is performed in the similar manner.

In this way, from the outset of the n-th cycle the contents of the output register 18 and the state variable register 2 become the value on which the late input signal is reflected and hence the state transition corresponding to input of the late input signal will be performed in the cycle subsequent to the cycle when the late input signal has been inputted.

It should be understood that in this embodiment, by outputting (S1, S0) = (1, 1) as the discrimination signal register output 43, when the late input signal 8 is either L1 = 1 or L0 = 1, the outputs from the constant generation circuit 13 can be used as the values in the subsequent cycle. In this way, the response to the value of the late input signal 8 can be changed in accordance with the value of the discrimination signal. Although in this embodiment, the discrimination signal is provided as the output from the combinational circuit 1, only the late input signal 8 as an input to the selector control circuit 40 may be used without providing the discrimination signal 41. Moreover, although in this embodiment, the selectors 14a and 14b are controlled by the selector control signal 9 which is the same output from the selector control circuit 40, it is needless to say that they may be controlled by individually provided outputs.

Embodiment 2

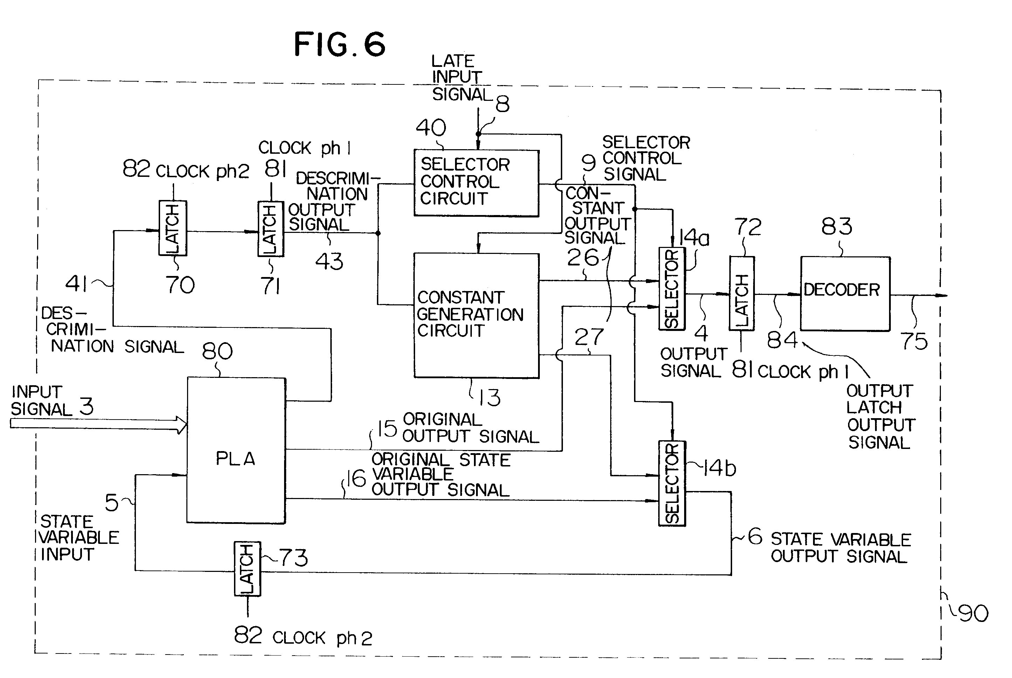

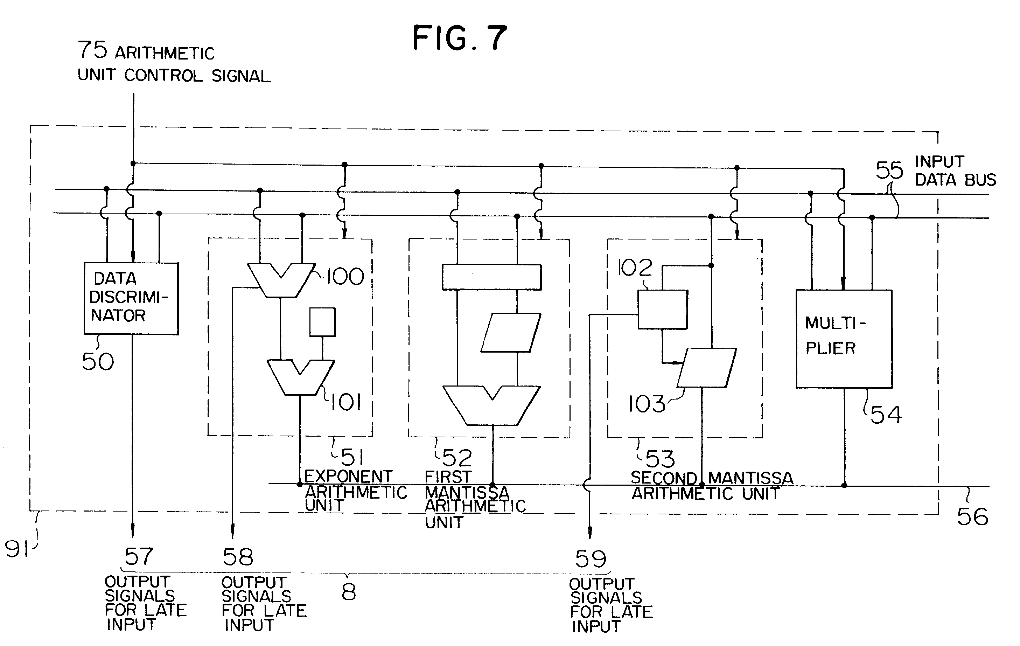

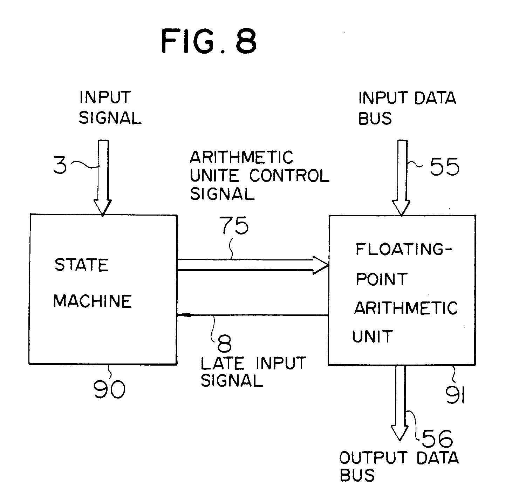

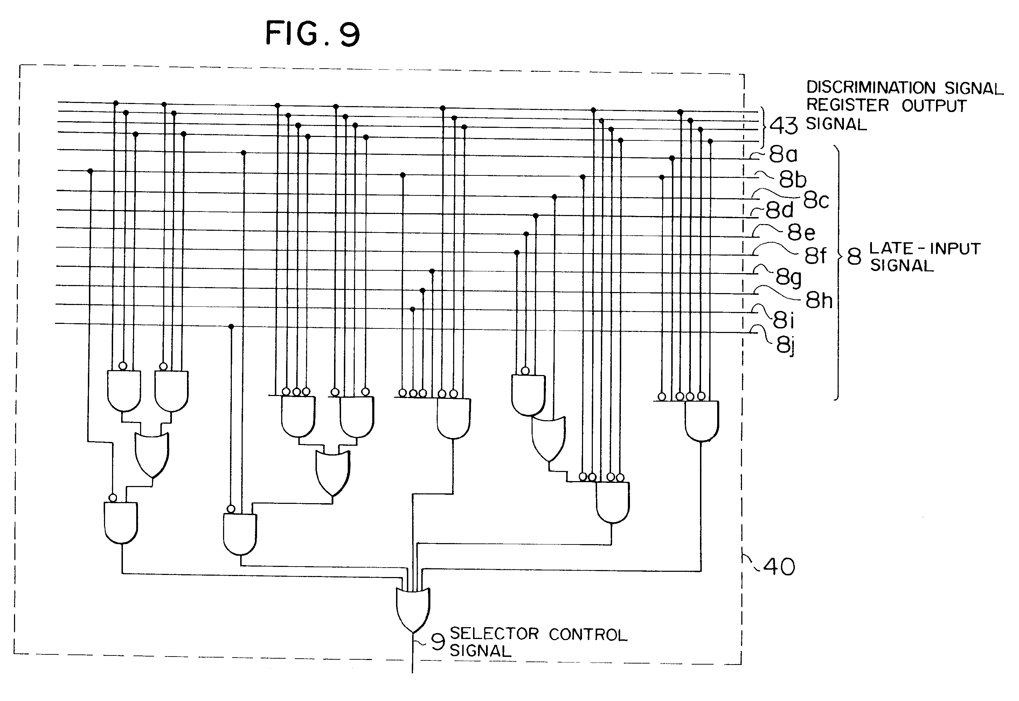

Fig. 6 is an arrangement diagram of the state machine according to a second embodiment of the present invention; Fig. 7 is the block diagram of the floating-point arithmetic unit which is controlled by the state machine according to the second embodiment; Fig. 8 is a view showing the connection relationship between the state machine 90 of Fig. 6 and the floating-point arithmetic unit 91 of Fig. 7; and Fig. 9 is a logic diagram of the selector control circuit shown in Fig. 6. Referring to these Figs. 6 to 9, the second embodiment of the present invention will be explained.

In the arrangement of Fig. 6, the components with the same reference numerals as the components in Fig. 4 have the same functions as those in Fig. 4 and so will not be explained here. In the arrangement of Fig. 6, used are clocks of two phases of clock ph1 (81) and clock ph2 (82) which drive latches 70 and 73, respectively. 80 is a synchronous PLA (Programmable Logic Array). It is assumed that the PLA 80 takes in an input signal at the rising edges of the clock ph2 (82). A decoder 83 serves to decode an output latch output signal 84 to generate an arithmetic unit control signal 75. It should be noted that in Fig. 6, the late input signal 8 is supplied to both the selector control circuit 40 and the constant generation circuit 13.

In the floating-point arithmetic unit 91 shown in Fig. 7, the above arithmetic unit control signal 75 is distributed to a plurality of arithmetic units, i.e. a data discriminator 50, an exponent arithmetic unit 51, a first mantissa arithmetic unit 52, the second mantissa arithmetic unit 53 and multiplier 54. An input data bus 55 is connected to the respective inputs of the above arithmetic units 50 to 54 and an output data bus 56 is connected to the respective outputs of the above arithmetic units 51 to 54. An output signal 57 for late input is outputted from the data discriminator 50; an output signal 58 for late input is outputted from the exponent arithmetic unit 51; and an output signal 59 for late input is outputted from the second mantissa arithmetic unit 53. For convenience of explanation it is assumed that the floating-point arithmetic unit 91 shown in Fig. 7 deals with 64-bit double precision floating-point numbers defined by the IEEE standard 754. In this floating-point expression, 64 bits are composed of one bit for code, eleven bits for exponent and 52 bits for mantissa. In this embodiment, the delay times of the respective output signals have an important meaning and so the delay times for the respective arithmetic units 50, 51 and 53 will be estimated as follows.

The data discriminator 50 discriminates the data on the input data bus 55 is infinity, Not-A-Number, denormalized number or zero to generate the output signal 57 for late input. The output signal 57 for the late input is generated by signals which tell the data on the input data bus 55 are all 1 or 0 (zero) in the exponents and a signal which tells that all bits in mantissas are zeros. The data discriminator 50 will generate the maximum delay with about four stage gate delay using mainly a four-input OR gate. The exponent arithmetic unit 51 is composed of the first exponent adder/substracter 100 and the second exponent adder/subtracter 101. A carry output from the first exponent adder/subtracter 100 is outputted as the output signal 58 for the late input. The first exponent adder/subtracter 100 operates immediately after the data on the data bus is inputted so that the carry output is generated at substantially the same speed as the addition of 11 bits. This can be realized through several gate stages using a carry look ahead circuit, for example. The second mantissa arithmetic unit 53 is composed of a priority encoder 102 and a left-direction barrel shifter 103, and the output signal 59 for the late input is outputted from the priority encoder 102. This output signal 59 for the late input is a signal on the basis of detection of "1" in the higher order 7 bits of the mantissa data input to the second mantissa arithmetic unit 53, and its delay, which is substantially equal to the detection of "1" in 7 bits, can be realized with 2 to 3 stage gate delay.

It is needless to say that if the aforesaid output signals 57, 58, and 59 for the late input are used as normal inputs to the PLA 80, a redundant unnecessary one cycle will be inserted as explained in connection with the prior art state machine. In this embodiment, the output signals 57, 58, and 59 for the late input are inputted, as the late input signals 8a to 8j, to the selector control circuit 40 the details of which is shown in Fig. 9. Also input to the selector control circuit 40 is the discrimination signal register output signal 43. In the example of Fig. 9, the late input signal is represented by ten signals and the discrimination signal register output signal 43 is represented by a four-bit signal. As seen from Fig. 9, the selector control signal 9 is generated with delay of several stages. Therefore, the number of gate delay stages required to generate the selector control signal 9 using the late input signal 8 input to the cycle when the floating-point arithmetic unit of Fig. 7 is operating is ten and several stages, and the output signal 4 and the state variable output signals 6 could be defined until the subsequent cycle. The role of the discrimination signal 41 in the second embodiment of the present invention is to indicate which of the late input signals 8a to 8j or in what logic is to be used to generate the selector control signal 9, which can be predicted in the cycle previous to the cycle when arithmetic is performed.

A simple example of this will be explained as follows.

It is assumed that the floating-point arithmetic unit 91 is now in an m-th cycle and the multiplication of floating-point numbers is to be performed in an (m + 1)-th cycle. Moreover, it is assumed that if input data are normalized numbers, the multiplication of the floating-point numbers will be performed in two cycles, however if the input data are denormalized numbers, they will be normalized in the floating-point arithmetic unit 91 and thereafter the multiplication thereof will be performed in two cycles. Whether the input data are normalized numbers or not, after they have been inputted, is detected in the (m + 1)-th cycle by the data discriminator 50. In this case, the PLA 80 generates the original output signal 15 which is required for the floating-point arithmetic unit 91 to perform the multiplication of floating-point numbers. And also it generates, as the discrimination signal 41, a signal indicative of the operation when the input data for multiplication are denormalized numbers.

In the (m + 1)-th cycle, the floating-point arithmetic unit 91 executes the multiplication of floating-point numbers. Concurrently, within the state machine 90, the discrimination signal register output signal 43 is inputted to the constant generation circuit 13 and the selector control circuit 40. In this example, this corresponds to the operation of normalizing the input data of denormalized numbers. It should be noted that it is not deterministic until the definition of the late input signal 8 if which of two input numbers for multiplication is a denormalized number, both are normalized numbers, or both are denormalized number. The PLA 80 also generates the original output signal 15 and the original state variable output signal 16 corresponding to the second cycle of multiplication. Soon the late input signal will be defined and input to the constant generation circuit 13 and the selector control circuit 40. The constant generation circuit 13 will immediately generate the constant outputs 26 and 27 corresponding to the discrimination signal register output signal 43 and the late input signal 8. For example, if only the first input data is a denormalized number, the constant output signals 26 and 27 will correspond to the operation of normalizing the first input data. As a result, the selector control signal 9 is defined so that as shown in Fig. 6, the selector 14a and 14b select the constant output signals 26 and 27, or the original output signal 15 and the original state variable output signal 16 thereby to decide the operation in the (m + 2)-th cycle. In this way, a redundant unnecessary cycle which was inevitable in the prior art state machine could be removed thereby to realize the high speed state transition.

Embodiment 3

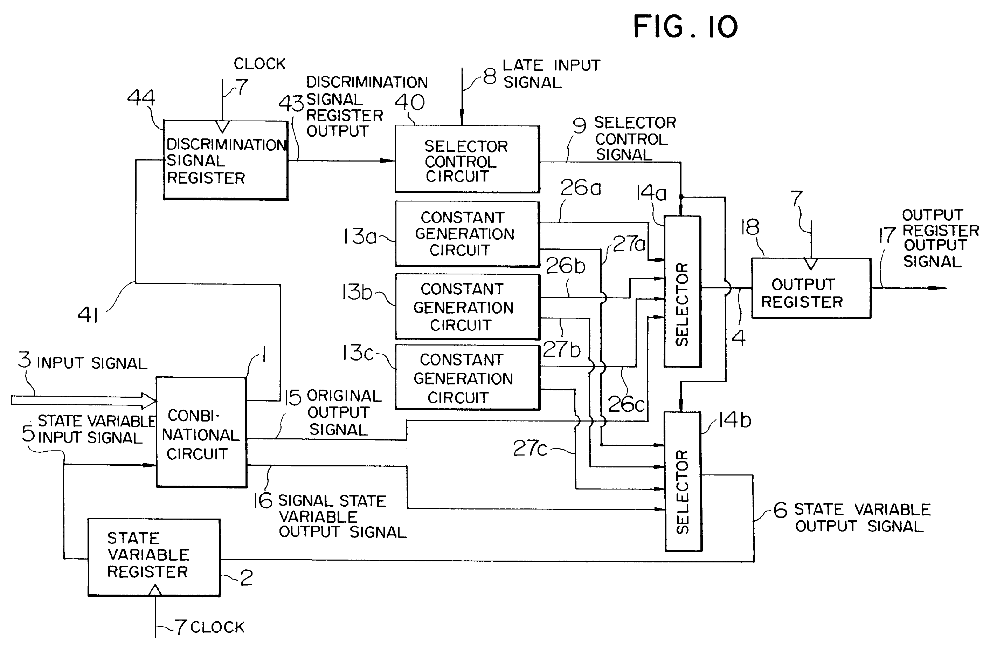

Fig. 10 is an arrangement diagram of the state machine according to the third embodiment of the present invention. In Fig. 10, the selector control circuit (second combinational logic circuit) 40, in response to input of the late input signal (second input signal) 8 and the discrimination signal register output signal 43, outputs the selector control signal 9. 13a to 13c are the first to third constant generation circuits, which generates the second to fourth output signals 26a to 26c and the second to fourth state variable output signals 27a to 27c, respectively. The first selector 14a and the second selector 14b are controlled by the selector control signal 9 which is an output from the selector control circuit 40. The first selector 14a selects the original output signal (first output signal) 15 from the combinational circuit (first combinational logic generation means), and the second to fourth output signals 26a to 26c thereby to generate the external output signal 4. Likewise, the second selector 14b selects the original state variable output signal (first state variable output signal) and the second to fourth state variable output signals 27a to 27c thereby to generate the state variable output signal 6. In the arrangement of Fig. 10, the first selector 14a and 14b must have four inputs, but this arrangement has an advantage that the respective constant generation circuits 13a to 13c can be simply constructed as compared with the embodiment of Fig. 1. It is needless to say that the other components in Fig. 10 have the same function as in the first embodiment of Fig. 4. Also the operation timing in this embodiment is substantially the same as the operation timing in the first embodiment as shown in Fig. 5.

Embodiment 4

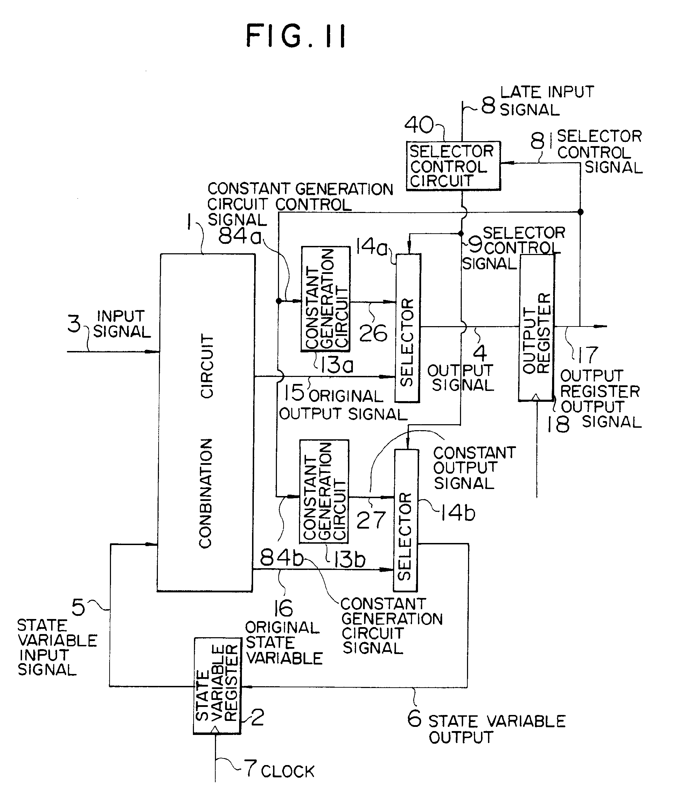

Fig. 11 is an arrangement diagram of the state machine according to the fourth embodiment of the present invention. In Fig. 11, a part of the output register output signal 17 is commonly used as a selector control signal 81, and constant generation circuit control signals 84a and 84b, which control the selector control circuit 40 (second combinational logic creation means), and the first and second constant generation circuits 13a and 13b, respectively. The selector control circuit 40, in response to input of the selector control signal 81 and the late input signal 8 (second input signal), generates the selector control signal 9. The first selector 14a selects the constant output signal 26 (second output signal) from the constant generation circuit 13a and the original output signal 15 from the combinational circuit (first combinational logic generation means) 1. Also, the second selector 14b selects the constant output signal (second state variable output signal) 27 from the second constant generation circuit 13b and the original state variable output signal 16 from the combinational circuit 1. This embodiment is characterized in that the selector control signal 81 is common to some of the output register output signal 17. Thus, the discrimination signal 41, which was provided individually in the first embodiment of the present invention (Fig. 4), can be removed, so that the total number of lines of the signal from the combinational circuit 1, the sum of the number of lines of the original output signal 15 and of the original state variable output signal 16 can be reduced. As a result, the scale of the combinational circuit 1 could be reduced. Incidentally, the operation timing in this embodiment is substantially the same as that shown in Fig. 5.

Additionally, although in this embodiment, all of the selector control signal 81 and the constant generation circuit control signals 84a and 84b were made common to a part of the output register output signal 17, only a part of the selector control signal 81 and the constant generation circuit control signals 84a and 84b may be made common to a part of the output register output signal 17 as in this embodiment whereas the remaining signal may be generated by the distinct discrimination signal 41 generated by the combinational circuit 1 as mentioned in connection with the first embodiment of the present invention (Fig. 4). The same effect of reducing the scale of the combinational circuit 1 can be obtained similarly in the same reason as mentioned above.

As understood from the foregoing explanation, in the state machine in accordance with the present invention, the late input signal defined on the way of a present operation cycle makes it possible to decide the state of the state machine. As a result, without inserting the operation cycle providing a redundant unnecessary state, the state transition to a target state can be attained immediately in the cycle subsequent to the present cycle, thereby implementing the state machine permitting high speed state transition.

**Claims**

1. A finite state machine comprising
      first combinational logic generation means (1) to which a first input signal (3) and a state variable input signal (5) are inputted and from which a first output signal (15) and a first state variable output signal (16) are outputted;
      characterized in that
      said first combinational logic generation means (1) is adapted to generate a discrimination signal (41), and in that
      the machine further comprises
      n (n: integer) constant generation means (13a to 13c);
      first selector means (14a);
      second selector means (14b); and
      second combinational logic generation means (40) to which a second input signal (8) and the discrimination signal (43) are inputted and from which at least one selection means controlling signal (9) is outputted;

wherein the i-th constant generation means (13) of said n numbers of constant generation means (13) generates an (i + 1)-th output signal (26a to 26c) and an (i + 1)-th state variable output signal (27a to 27c); said first selector means (14a) selects said first to (n + 1)-th output signals (15, 26a to 26c) whereas said second selector means (14b) selects said first to (n + 1)-th state variable output signals (16, 27a to 27c); said first and second selector means (14a, 14b) are controlled by said selector means control signal (9); and the output signal (4) from said first selection means (14a) constitutes an output signal (17) from the state machine and the output signal (6) from the second selection means (14b) constitutes the state variable input signal (5).

2. The finite state machine of claim 1,
   wherein n = 1, and
   wherein the discrimination signal is inputted into said constant generating means (13).

3. The finite state machine according to claim 2, wherein said second input signal (8) is inputted to said constant generation circuit (13).

4. The finite state machine of claim 1,
   wherein n = 2, and
   wherein at least one of said constant generation means (13a, 13b) and said second combinational logic generation means (40) is controlled by a part of said state machine output signal (17).

5. A finite state machine according to any preceding claim, wherein said first combinational logic generation means (1) is a programmable logic array (PLA).

**Patentansprüche**

1. Endlicher Automat mit
   - einem ersten Generierungsmittel mit kombinatorischer Logik (1), an dessen Eingängen ein erstes Eingangssignal (3) und ein Zustandsvariableneingangssignal (5) liegen und das ein erstes Ausgangssignal (15) und ein erstes Zustandsvariablenausgangssignal (16) ausgibt;
   gekennzeichnet dadurch, daß
   dieses erste Generierungsmittel mit kombinatorischer Logik (1) zur Generierung eines Diskriminierungssignals (41) geeignet ist, sowie dadurch, daß
   der Automat des weiteren aufweist
   - n (n: ganzzahlig) Konstantengenerierungsmittel (13a bis 13c);

   - ein erstes Wählmittel (14a);
   - ein zweite Wählmittel (14b); und
   - ein zweites Generierungsmittel für kornbinatorische Logik (40), an dessen Eingängen ein zweites Eingangssignal (8) und das Diskriminierungssignal (43) liegen und das wenigstens ein Wählmittelsteuersignal (9) ausgibt;
   wobei das i-te Konstantengenerierungsmittel (13) der erwähnten Anzahl von n Konstantengenerierungsmitteln (13) ein (i+1)-tes Ausgangssignal (26a bis 26c) und ein (i+1)-tes Zustandsvariablenausgangssignal (27a bis 27c) generiert; das erste Wählmittel (14a) wählt das erste bis (n+1)-te Ausgangssignal (15, 26a bis 26c), das zweite Wählmittel (14b) hingegen wählt das erste bis (n+1)-te Zustandsvariablenausgangssignal (16, 27a bis 27c), das erste und zweite Wählmittel (14a und 14b) werden durch das Wählmittelsteuersignal (9) gesteuert; und das Ausgangssignal (4) des ersten Wählmittels (14a) bildet ein Ausgangssignal (17) des endlichen Automaten und das Ausgangssignal (6) des zweiten Wählmittels (14b) bildet das Zustandsvariableneingangssignal (5).

2. Endlicher Automat nach Anspruch 1,
   wobei n = 1, und
   wobei das Diskriminierungssignal am Eingang des Konstantengenerierungsmittels (13) liegt.

3. Endlicher Automat nach Anspruch 2, wobei das zweite Eingangssignal (8) am Eingang der Konstantengenerierungsschaltung (13) liegt.

4. Endlicher Automat nach Anspruch 1,
   wobei n = 2 , und
   wobei mindestens eines der Konstantengenerierungsmittel (13a, 13b) und das zweite Generierungsmittel mit kombinatorischer Logik (40) durch einen Teil des Ausgangssignals (17) des endlichen Automaten gesteuert wird.

5. Endlicher Automat nach einem der vorstehenden Ansprüche, wobei das erste Generierungsmittel mit kombinatorischer Logik (1) ein *programmable logic array* (PLA) ist.

**Revendications**

1. Automate fini, comprenant
   des premiers moyens générateurs de logique combinatoire (1) auxquels un premier signal d'entrée (3) et un signal d'entrée de variable d'état (5) sont appliqués en entrée et par lesquels un premier signal de sortie (15) et un premier signal de sortie de variable d'état (16) sont délivrés en sortie,

caractérisé en ce que

lesdits premiers moyens générateurs de logique combinatoire (1) sont agencés de façon à produire un signal de discrimination (41), et en ce que

l'automate comprend en outre

n (n: nombre entier) moyens générateurs de signal constant (13a à 13c),

des premiers moyens sélecteurs (14a),

des seconds moyens sélecteurs (14b) et

des seconds moyens générateurs de logique combinatoire (40) auxquels un second signal d'entrée (8) et le signal de discrimination (43) sont appliqués en entrée et par lesquels au moins un signal (9) de commande des moyens sélecteurs est délivré en sortie,

dans lequel le $i^{ème}$ moyen générateur de signal constant (13) parmi lesdits n moyens générateurs de signal constant (13) produit un $(i + 1)^{ème}$ signal de sortie (26a à 26c) et un $(i + 1)^{ème}$ signal de sortie de variable d'état (27a à 27c), lesdits premiers moyens sélecteurs (14a) sélectionnent lesdits premier à $(n + 1)^{ème}$ signaux de sortie (15, 26a à 26c), tandis que lesdits seconds moyens sélecteurs (14b) sélectionnent lesdits premier à $(n + 1)^{ème}$ signaux de sortie de variable d'état (16, 27a à 27c), lesdits premiers et seconds moyens sélecteurs (14a, 14b) sont commandés par ledit signal (9) de commande des moyens sélecteurs, et le signal de sortie (4) desdits premiers moyens sélecteurs (14a) constitue un signal de sortie (17) dudit automate fini et le signal de sortie (6) des seconds moyens sélecteurs (14b) constitue le signal d'entrée de variable d'état (5).

2. Automate fini selon la revendication 1, dans lequel n = 1 et dans lequel le signal de discrimination est appliqué en entrée auxdits moyens générateurs de signal constant (13).

3. Automate fini selon la revendication 2, dans lequel ledit second signal d'entrée (8) est appliqué en entrée audit circuit générateur de signal constant (13).

4. Automate fini selon la revendication 1, dans lequel n = 2 et dans lequel l'un au moins desdits moyens générateurs de signal constant (13a, 13b) et desdits seconds moyens générateurs de logique combinatoire (40) est commandé par une partie dudit signal (17) de sortie de l'automate fini.

5. Automate fini selon l'une quelconque des revendications 1 à 4, dans lequel lesdits premiers moyens générateurs de logique combinatoire (1) sont une matrice logique programmable (PLA).

# FIG. I
## PRIOR ART

7 CLOCK

INPUT
SIGNAL
3

OUTPUT
SIGNAL
4

I

18 OUTPUT
REGISTER

COMBINATIONAL
CIRCUIT

17 OUTPUT
REGISTER
OUTPUT
SIGNAL

STATE
VARIABLE
INPUT
SIGNAL

5

6 STATE
VARIABLE
OUTPUT
SIGNAL

2 STATE VARIABLE
REGISTER

7

CLOCK

# FIG . 2

## PRIOR ART

# FIG. 3a

# FIG. 3b

# FIG. 4

CLOCK 7

44 DESCRIMI-NATION SIGNAL REGISTER

43

41 DESCRIMINATION SIGNAL

LATE INPUT SIGNAL 8

40 SELECTOR CONTROL CIRCUIT

9 SELECTOR CONTROL SIGNAL

CONSTANT OUTPUT SIGNAL

13 CONSTANT GENERATION CIRCUIT

26

27

14a SE-LECTOR

7 CLOCK

17 OUTPUT REGISTER OUTPUT SIGNAL

18 OUTPUT REGISTER

INPUT SIGNAL 3

1 COMBI-NATIONAL CIRCUIT

15 ORIGINAL OUTPUT SIGNAL

4 OUTPUT SIGNAL

14b SE-LECTOR

5 STATE VARIABLE INPUT SIGNAL

16 ORIGINAL STATE VARIABLE OUTPUT SIGNAL

STATE VARIABLE REGISTER

2

6 STATE VARIABLE OUTPUT SIGNAL

7 CLOCK

EP 0 356 940 B1

# FIG. 5

FIG.6

# FIG. 7

75 ARITHMETIC
UNIT CONTROL SIGNAL

55 INPUT
DATA BUS

DATA DISCRIMI-NATOR

50

100

101

102

103

51 EXPONENT ARITHMETIC UNIT

52 FIRST MANTISSA ARITHMETIC UNIT

53 SECOND MANTISSA ARITHMETIC UNIT

MULTI-PLIER

54

56

91

57 OUTPUT SIGNALS FOR LATE INPUT

58 OUTPUT SIGNALS FOR LATE INPUT

8

59 OUTPUT SIGNALS FOR LATE INPUT

EP 0 356 940 B1

# FIG. 8

INPUT
SIGNAL

INPUT DATA
BUS

ARITHMETIC
UNITE CONTROL
SIGNAL

3

55

75

STATE

MACHINE

FLOATING-

POINT

ARITHMETIC

UNIT

8

90

LATE INPUT
SIGNAL

91

56

OUTPUT DATA
BUS

# FIG. 9

DISCRIMINATION SIGNAL
REGISTER OUTPUT
43 SIGNAL

8a
8b
8c
8d
8e
8f          8  LATE-INPUT
8g             SIGNAL
8h
8i
8j

40

9 SELECTOR CONTROL
  SIGNAL

EP 0 356 940 B1

FIG. IO

# FIG. 11